# EUROPEAN PATENT SPECIFICATION

(11) **EP 1 556 777 B1**
(45) Date of publication and mention of the grant of the patent: **30.05.2018**
(21) Application number: 03734453.8
(22) Date of filing: 06.06.2003
(51) Int. Cl.: G06F 15/173, H04L 12/24, H04L 12/26

(54) **SYSTEM AND METHOD FOR SYNCHRONIZING THE CONFIGURATION OF DISTRIBUTED NETWORK MANAGEMENT APPLICATIONS**
SYSTEM UND VERFAHREN ZUR SYNCHRONISIERUNG DER KONFIGURATION VERTEILTER NETZWERKVERWALTUNGSANWENDUNGEN
SYSTÈME ET PROCÉDÉ PERMETTANT DE SYNCHRONISER LA CONFIGURATION D'APPLICATIONS DE GESTION DE RÉSEAU REPARTI

(30) Priority: 07.06.2002 US 387517 P; 31.12.2002 US 335272
(43) Date of publication of application: 27.07.2005
(73) Proprietor: Time Warner Cable Enterprises LLC, St. Louis, MO 63131 (US)
(72) Inventor: KORTRIGHT, Kris, Herndon, VA 20171 (US)
(74) Representative: Blaser, Stefan
(86) International application number: PCT/US2003/017911
(87) International publication number: WO 2003/104930

(56) References cited:
- EP-A1- 1 107 108
- EP-A2- 1 039 685
- WO-A2-02/39351
- US-A- 5 835 911
- US-A- 5 909 568
- US-A- 6 128 656
- US-B1- 6 292 472
- US-B2- 6 405 219

## Description

### FIELD OF THE INVENTION

The present invention relates to network management. More specifically, the present invention is an automated change management system and method to manage diverse management functions across a network in an automated fashion.

### BACKGROUND OF THE INVENTION

It is difficult to imagine a communication process that does not involve a collection of devices connected by a network. Networks carry voice and data communications for communication, entertainment, business, and defense endeavors to name but a few. For a variety of reasons, most networks are collections of smaller sub-networks that are managed first at the sub-network level and then at the integrated network level. Management comprises configuring devices for connection to the network, monitoring and reporting on network and device loads, and managing device failure.

A device is often managed by a variety of applications depending on the function to be managed. For example, the workload of a device may be managed by application A supplied by vendor A and the configuration of a device may be managed by application B supplied by vendor B. In this example, application A is configured via a script to manage device A and reports its results to a workload database. Application B is configured using a text file to manage the configuration of device B and reports its results to a configuration database. Typically, applications A and B cannot directly communicate with each other or share data.

In modern day networks such as wireless networks, intranets or the Internet, there are a number of network devices of various types. Such network devices may be workstations, routers, servers, and a wide variety of other smart devices that appear on networks. Network management tools have evolved to manage these devices. As networks have increased in size and complexity, network management functions have become increasingly resource intensive.

Network management comprises a number of functions, including (but without limitation) fault management, configuration management, performance management, security management, inventory management and cost management. Of these functions, configuration management is of particular importance as it affects in varying degree the effectiveness of the other network management systems in managing all of the other functions.

Most devices and applications on a network (sometimes collectively referred to as objects) are designed to be configured, thus broadening the applications for which a particular object can be used. The information comprising an object's configuration is both object and context dependent. That is, the configuration of a device may depend on the device, where in a network it is installed, what it is connected to, what applications it is intended to run, and the like. In order for a network to operate efficiently, the configuration of the various objects comprising the network must be known at all times. An unplanned change in the configuration of a router, for example, may cause the network performance to deteriorate or to fail altogether, may result in increased error reporting and error correction processing time, and cause the network operator to expend resources to locate and correct the configuration error.

Network management tools have been developed to detect changes in the configurations of critical network components. These tools monitor the configuration files of such objects, issue alarms when a change is detected, and offer manual or automatic restoration of the changed configuration file to a file known to be good. However, current configuration monitoring tools are reactionary. Such tools can determine that a configuration has changed, but cannot initiate a reconfiguration of specific devices or applications on the network or sub-network, or relate the configuration of one device on a network to another device on that network without human intervention. Rather, many traditional network management systems are maintained by hand-entering device lists into individual network management applications with no common-ties between the different applications.

Whenever a network device is changed or upgraded, it frequently becomes necessary to insure that the upgrade is populated throughout the network in order for devices to talk to one another in an error free way. The difficulty with updating distributed network devices is that this typically occurs on a device-by-device basis. Therefore the possibility of human error is ever present. Misentering or omitting device information into different network management applications results in a network that is not effectively managed. Further, if different network management applications are present on various network devices, over time, the network applications become increasingly asynchronous resulting in critical failures and the potential for loss of visibility on the network of various devices.

At any point in time, it is desirable for a network management application to know the configuration of each configurable device that such network management application is managing. This is accomplished by the network management application polling the managed devices and keeping a record of the polled data. However, networks with a large number of network management applications have difficulty synchronizing against a single inventory of devices and synchronizing device status over all of the network management applications. And, as previously noted, the network management applications are typically from diverse vendors and may not be able to communicate with each other. The result is that over the network, the data used to manage the configuration of network devices and network device polling applications is not current, and becomes less current (more asynchronous) as time goes on.

Various approaches to improving network management systems have been disclosed. U.S. Patent 5,785,083 ('083 Patent) to Singh, et al. entitled "Method And System For Sharing Information Between Network Managers," discloses a technique for managing a network by sharing information between distributed network managers that manage a different portion of a large network. Databases in the different network managers can be synchronized with each other. The information that is shared is to be used by an end-user who monitors the network and takes corrective action when necessary.

U.S. Patent 6,295,558 ('558 Patent) to Davis, et. al., entitled "Automatic Status Polling Failover For Devices In A Distributed Network Management Hierarchy," discloses an automatic failover methodology whereby a central control unit, such as a management station, will automatically takeover interface status polling of objects of a collection station that is temporarily unreachable. The **'558 Patent** teaches a failover methodology that reassigns polling responsibility from a failed collection station to a central control unit (such as a management station). A polling application at the central control unit obtains the topology of the failed collection station and performs polling until the polling station returns to operational status.

U. S. Patent 6,345, 239 (the '239 Patent) to Bowman-Amuah, entitled "Remote Demonstration Of Business Capabilities In An E-Commerce Environment," discloses and claims a system, method and article of manufacture for demonstrating business capabilities in an e-commerce environment. The '239 Patent discloses, but does not claim, network management functionality that refers to synchronization of configuration data over a communication system as an objective. The disclosures, made in the context of a discussion of a network configuration and re-routing subprocess, describe functions but not means.

U. S. Patent Application 20020057018 (the '018 Application) to Branscomb, et. al., entitled"Network device power distribution scheme, "discloses and claims a telecommunications network device including at least one power distribution unit capable of connecting to multiple, unregulated DC power feeds. The '018 Application further discloses (but does not claim) an approach to a network management system that features a single data repository for configuration information of each network device. Network servers communicate with network devices and with client devices. Client devices communicate with a network administrator. The administrator can use a client to configure multiple network devices. Client devices also pass configuration requirements to the network servers and receive reports from network relating configuration data of network devices. According to this approach, pushing data from a server to multiple clients synchronizes the clients with minimal polling thus reducing network traffic. Configuration changes made by the administrator directly are made to the configuration database within a network device (through the network server) and, through active queries, automatically replicated to a central NMS database. In this way, devices and the NMS are always in synch.

US Patent 6,128,656 describes a system for updating a memory storing configuration information of a network element. The described operation of the system is based on traps that are generated by the network element. A network management device may poll a network element for trap information.

EP 1 039 685 describes a method and apparatus for managing IP addressing in a network and effectively synchronizing communication between a central database and one or more servers. In this document, it is proposed that the server manager polls periodically the central database for any changes in configuration made to the network. In contrast to this prior art, the present application is drawn to at least address the problem of maintaining the configuration information synchronization of network devices in real time. EP 1 039 685 does not directly address this problem. WO 02/39351 A2 focuses in its disclosure on how to propagate a configuration change of an object stored in a registry to the other registries in a network using a master registry as means to propagate such a change.

The approaches described in these references are those that relate to management of the network manually. What would be particularly useful is a system and method that automates the change management process in real-time using a two-way communications model that permits a central database to affect changes on all or some network management applications/systems in the field, while also allowing those same field systems to affect the central database. It also would be desirable for such a system and method to update all network management applications on the network upon the occurrence of a change in a network device and to manage failover through logically assigned buddies. Finally, such a system and method would also decrease the errors associated with human intervention to update network management applications.

### SUMMARY OF THE INVENTION

Objects of the present invention are a system as claimed in claim 1 and a method as claimed in claim 13 for managing and synchronizing network management applications from a common source. A change management process is automated by employing a real time two way communications model that permits a central database comprising the latest network management software and configuration to effect changes on all or some network management applications and systems in the field. Preferred embodiments are covered by the dependent claims.

It is therefore an aspect of the present invention to eliminate human errors associated with updating network management applications.

It is a further aspect of the present invention to insure that network applications are synchronized when a network device is added or removed, or when the configuration of a network device is changed.

It is yet another aspect of the present invention to significantly reduce the time required to update network monitoring systems when device changes occur in the network.

It is still another aspect of the present invention to create and install a configuration file on the network management system applications for any new network device added to the network.

It is still another aspect of the present invention to provide application fail over capabilities for those devices using the same application and between different applications on a network according to certain rules and based on logically assigned backup servers ("buddies").

It is yet another aspect of the present invention to automatically detect changes in devices on the network and immediately update all network management system applications associated with changed devices.

It is still another aspect of the present invention to update a central database concerning all network management applications and devices on the network.

It is still another aspect of the present invention to maintain complete synchronization of all devices that are being monitored on a network.

These and other aspects of the present invention will become apparent from a review of the description that follows.

In an embodiment of the present invention, a change management engine synchronizes the configuration of distributed network management applications, as well as synchronize device status from those same distributed network management applications with a central database. "Change management" as used in this context means the process by which network management poller and aggregation applications are synchronized to the exact configurations of the devices they monitor in real-time without human intervention. The network can be a wired, or wireless network. Further, embodiments of the present invention operate on an intranet, the Internet, or any other wired or wireless network that is to be managed as an entity. These embodiments operate in an application-diverse environment allowing the synchronization of networks that use applications of different vendors to perform various network management functions.

In an embodiment of the present invention, the change management process is automated by employing a real time two way communications model that permits a central database comprising the latest network management software and configuration to effect changes on all or some network management applications and systems in the field. In this embodiment, field systems also affect the central database by transmitting polled information into that database. Each network device is entered into a central database one time. After the initial data entry, this embodiment of the present invention handles all of the processes associated with configuring different and distributed network management systems and applications in the field. Thus, this embodiment of the present invention acts as a manager of other system managers in order to insure that all network management applications are synchronized across the network and binds many disparate functions of change management under one control model. Further, automating the configuration process reduces the risk that human error will disrupt the monitoring of critical systems.

In yet another embodiment of the present invention, the process of handing over tasks of a failed monitoring device (fail over) is managed in real-time fail over capability. This embodiment allows a single graphical user interface to be the means of monitoring a plurality of devices over the network. The plurality of devices is polled by any number of different servers and applications with responses from the polling reported via Simple Network Management Protocol (SNMP) to a central database. Thus a unified view of the status of each of the devices on the network is created and monitored.

### BRIEF DESCRIPTION OF THE DRAWINGS

**Figure 1** illustrates elements of a typical network management system.
**Figure 2A** illustrates elements of a network manage system with a change management system added according to an embodiment of the present invention.
**Figure 2B** illustrates elements of a network manage system comprising an application server running a device information gathering application in a change management system according to an embodiment of the present invention.
**Figure 2C** illustrates elements of a network manage system comprising a discrete device information gathering application in a change management system according to an embodiment of the present invention.
**Figure 3** illustrates a data management workflow of a change management system according to an embodiment of the present invention.
**Figure 4** illustrates the components of a core engine according to an embodiment of the present invention.
**Figure 5** illustrates the components of an autocontroller according to an embodiment of the present invention.
**Figure 6** illustrates the core engine/autocontroller transfer file formats as used in an embodiment according to the present invention.
**Figure 7** illustrates the structure of a meta file as used in an embodiment according to the present invention.
**Figure 8** the structure of an OID configuration file as used in an embodiment according to the present invention.

### DETAILED DESCRIPTION OF THE INVENTION

The description of the present invention that follows utilizes a number of acronyms the definitions of which are provided below for the sake of clarity and comprehension.
APISC - Application Programming Interface Super Controller
ASCII - American Standard Code for Information Interchange
DIDB - Device Inventory Database
DPM - Data Poller Module
DSM - Distributed Status Monitor
FTP - File Transfer Protocol
GUI - Graphical User Interface
ID - Identification
IP - Internet Protocol
NDB - Network Database
NMS - Network Management System
NOC - Network Operations Center
Object - a network application or network device that is configurable.
ODBC - Open Database Connectivity
OID - Object Identifier
OSPF - Open Shortest Path First Interior Gateway Protocol
RDC - Regional Data Center
SNMP - Simple Network Management Protocol
TMP -- Temporary

In addition, certain NMS software products are referred to by their product names, which include the following:
- Netcool (MicroMuse, Inc.)
- Visionary (MicroMuse, Inc.)
- Internet Service Monitor or "ISM" (MicroMuse, Inc.)
- Remedy (BMC Software, Inc.)

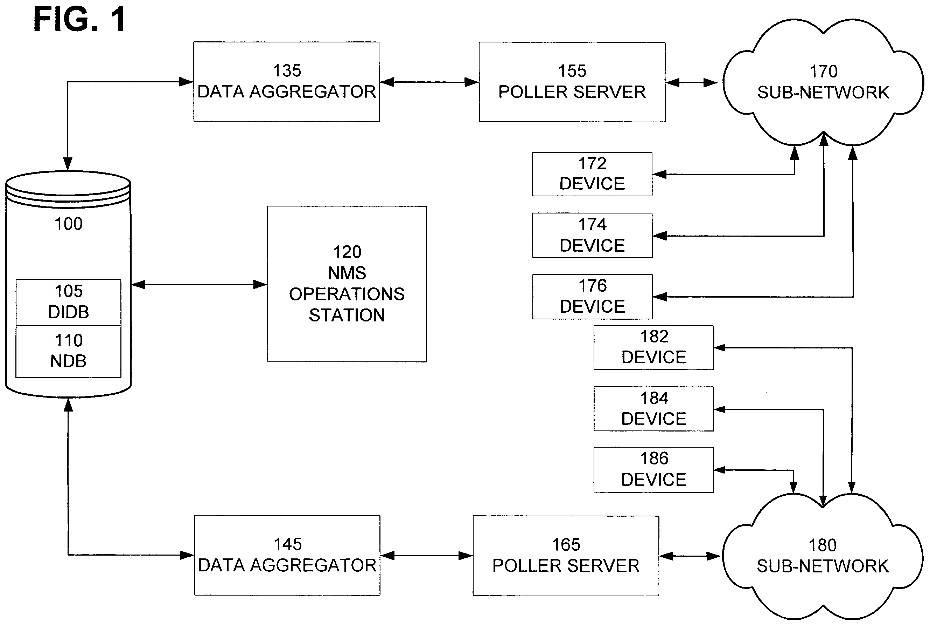

Referring to **Figure 1****,** the elements of a network management system (NMS) are illustrated. NMS operations station **120** is linked to a central database **100.** Central database **100** comprises a device inventory database (DIDB) **105** and the network database (NDB) **110.** The DIDB **105** stores configuration data for applications used to manage the network management system (NMS). For each sub-network managed by network management system, configuration data for devices on that sub-network are acquired by the associated poller server (for example, poller server **155**), aggregated by the associated data aggregator (for example, data aggregator **135**), and stored in the NDB 110.

Central database **100** is linked to data aggregators **135, 145.** Data aggregators **135** and **145** are linked, respectively, to NMS poller servers **155** and **165.** NMS poller server **155** monitors sub-network **170** and NMS poller server **165** monitors sub-network **180.** Sub-network **170** comprises devices **172, 174,** and **176,** and sub-network **180** comprises devices **182, 184,** and **186.** By way of illustration, and not as a limitation, a "device" comprises a router, a switch, a modem, a server, or other configurable device and a software application. For ease of discussion, only two sub-networks have been illustrated in **Figure 1****,** but this is not meant as a limitation. As will be appreciated by those skilled in the art of the present invention, any number of sub-networks may be under the management of the network management system without departing from the scope of the present invention, which is defined by the appended claims. As illustrated in **Figure 1****,** NMS poller server **155** and NMS poller server **165** are linked to each other to create redundancy should one of the NMS poller servers fail. Additionally, for purposes of illustration and not as a limitation only two NMS poller server/data aggregator pairs are shown in **Figure 1****.** As will be apparent to those skilled in the art of the present invention, a plurality of NMS poller server/data aggregator pairs may be used to manage either sub-network.

Each NMS poller server/data aggregator pair manages the sub-network to which it is assigned by polling the sub-network for relevant data. The particular tasks performed by a NMS poller server depend on the application software running on that server. Typical tasks include monitoring network devices for changes in configuration, performance, load, and environmental parameters, analyzing the data received from network devices, and sending the data to the central database **100** for further processing by NMS operations station **120.**

In the NMS illustrated in **Figure 1****,** the management of the NMS poller servers and data aggregators is through NMS operations station **120.** The NMS operations station **120** is monitored by human operators who evaluate events reported to the central database and make decisions about problem resolution.

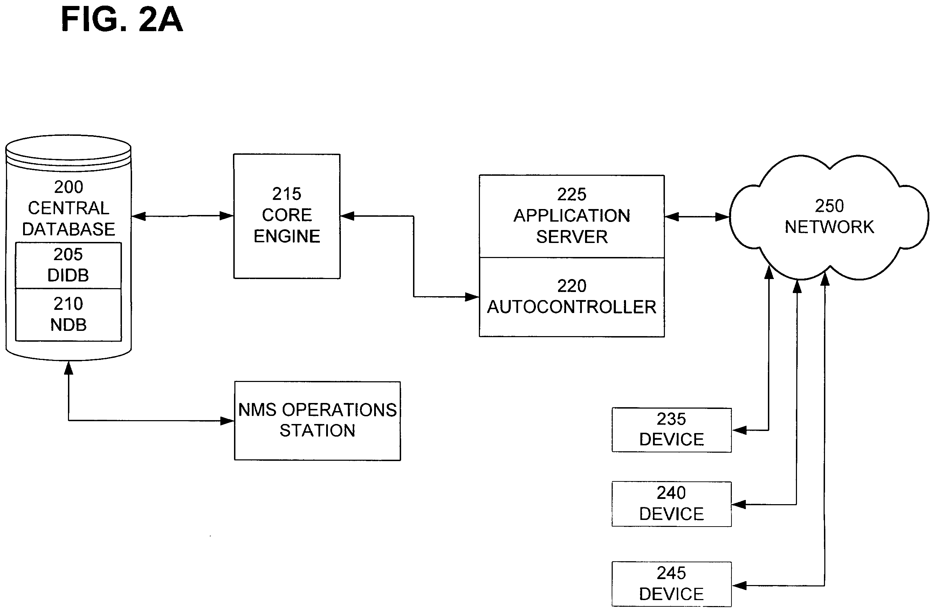

Referring now to **Figure 2A****,** a portion of a network management system is illustrated with the addition of elements comprising a change management system according to an embodiment of the present invention. The central database **200** (comprising DIDB **205** and NDB **210**) is linked to core engine **215.** Core engine **215** is linked to auto controller **220.** Autocontroller **220** is co-located on an application server **225.** Application server **225** is linked to one or more devices **230, 235,** and **240** over network **250.** Devices **230, 235,** and **240** comprise configurable devices and applications. Application server **225** manages these devices according to the task to which application server **225** is assigned.

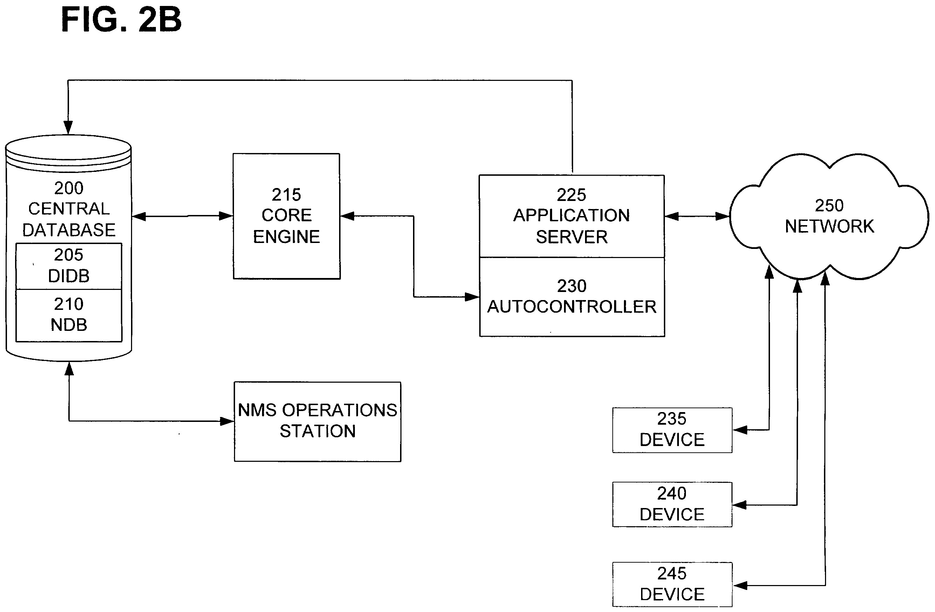

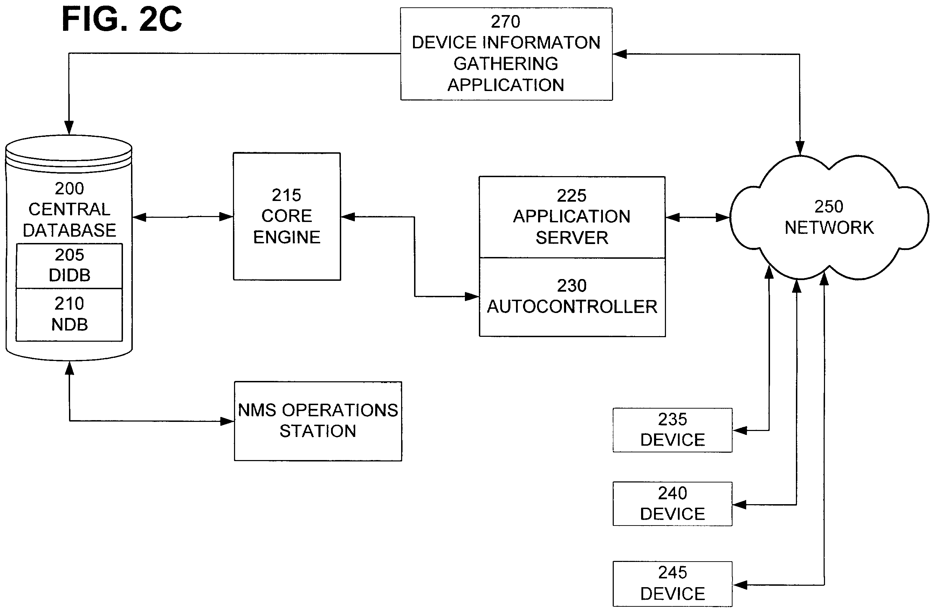

In an embodiment of the present invention, application server **225** comprises a device information gathering application (as illustrated in **Figure 2B**). In an alternate embodiment, the device gathering function is performed by a device information gathering application **270** that is not operated by application server **225** (as illustrated in **Figure 2C**). As will be apparent to those skilled in the art, application server **225** may implement one of a number of network management tools without departing from the scope of the present invention which is defined in the appended claims. By way of illustration, application server **225** may be a reporting engine, a network portal, or an access control server.

In an embodiment of the present invention and as illustrated in **Figure 2A****,** autocontroller **220** resides on application server **225.** In an alternate embodiment, autocontroller **220** comprises a discrete functional component that is linked to application server **225.** Autocontroller **220** manages, configures, and monitors all of the applications running on application server **225.** Core engine **215** acts as the hub of the network management system configuration control functions. While core engine **215** is illustrated in **Figures 2A****,** **2B****,** and **2C** as a stand-alone component, the invention is not so limited. As will be appreciated by those skilled in the art, the functions of core engine **215** may be integrated with other network management functions without departing from the scope of the present invention which is defined by the appended claims.

Core engine **215** reads device, site, polling, and configuration data from the DIDB **205,** analyzes configuration data, builds application configuration files when needed, updates the DIDB **210** with the most current data, schedules device polling, and manages and monitors auto controller **220.** Together, the core engine **215** and autocontroller **220** provide an existing network management system with the capability to automate the change management process in real-time.

In another embodiment, the autocontroller resides on each server that contains network management applications requiring core engine control. The autocontroller installs updated configuration files, launches and restarts applications, executes shell commands, parses and analyzes output files, returns any requested results back to be the core engine, and backs up another autocontroller (a "buddy"). With respect to this latter function, an autocontroller is capable of performing the functions of its buddy autocontroller should the buddy autocontroller experience a failure. Additionally, each autocontroller comprises redundancy features to determine when the assigned buddy autocontroller fails or becomes unreachable. While **Figures 2A****,** **2B****,** and **2C** illustrate a single autocontroller managing a single application server, the present invention is not so limited. Any number of autocontrollers may each be paired with an application server under the control of a core engine to implement a change management system on any size network.

The network management systems illustrated in **Figure 1** and **Figures 2A****,** **2B,** and **2C** are, of course, simplified views of the architecture of a functioning NMS. What these views illustrate is that the addition of the elements of the change management system of the present invention significantly increases the ability of NMS to manage itself without the need for human intervention. Thus, the core engine and the auto controller of the present invention reside within a network management system and mange the systems that manage the network.

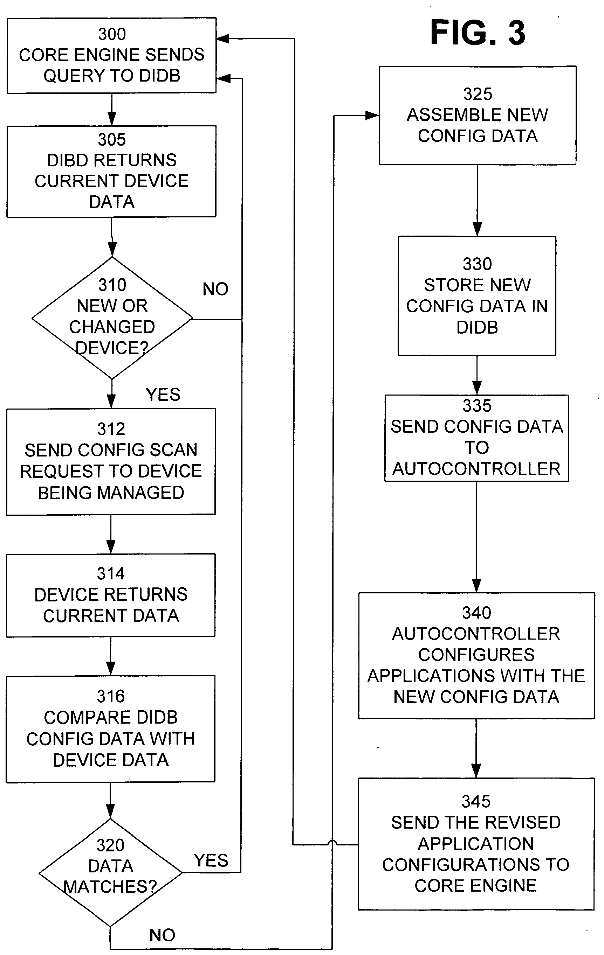

Referring to **Figure 2A** and **Figure 3** **(SEE REVISED** **FIG 3** **- PAGE AFTER NEXT),** a data management workflow of a change management system according to an embodiment of the present invention is illustrated. The workflow is described in reference to a network management system illustrated in **Figure 2A****.** In this embodiment, the core engine **215** sends a query to the device inventory database (DIDB) **300** to obtain information relating to devices (**235, 240, 245**) controlled by application server **225.** The DIDB returns the current device data **305** and the core engine **215** checks the results for devices that are new or modified since the last time the query was run **310.** For each device determined to be new or modified, the core engine **215** sends an initiate configuration scan request **312.** The current configuration data of a device (device **235** is selected for ease of discussion) is returned from the device to the core engine **314** and compared to the configuration data stored in the DIDB **(205) 316.** If data from the DIDB **(205)** and the device **(235)** do not match **320,** the core engine assembles new configuration data **325** for each application running on application server **(225).**

The new configuration data are stored in the DIDB **(205) 330** and then sent to the autocontroller **(220) 335.** The autocontroller **(220)** configures the applications running on application server **(225)** with the new configuration data **340.** As discussed below, the configuration data is customized to the format expected by each application running on the application server **(225).** The autocontroller **(220)** sends the revised application configuration data back to the core engine **(215) 345.** The revised configuration data are again compared with the data in DIDB **(205)** to ensure that the DIDB and the application server **(225)** applications are in sync as to the current configuration of the device **(235).** If variations are detected, the process of updating the application server is repeated.

The change management process illustrated in **Figure 3** is cyclical in nature and works in the real-time, requiring no human intervention to maintain accurate data acquisition and device monitoring. At the end of this cycle, the network is in sync with respect to device and application configurations, a result achieved without human intervention.

### EXEMPLARY EMBODIMENTS

The exemplary embodiments that follow are intended to illustrate aspects of the present invention, but are not meant as limitations. As will be apparent to those skilled in the art, the present invention may be practiced in embodiments other than the exemplary embodiments described herein without departing from the scope of the present invention which is defined in the appended claims.

### A. The Core Engine

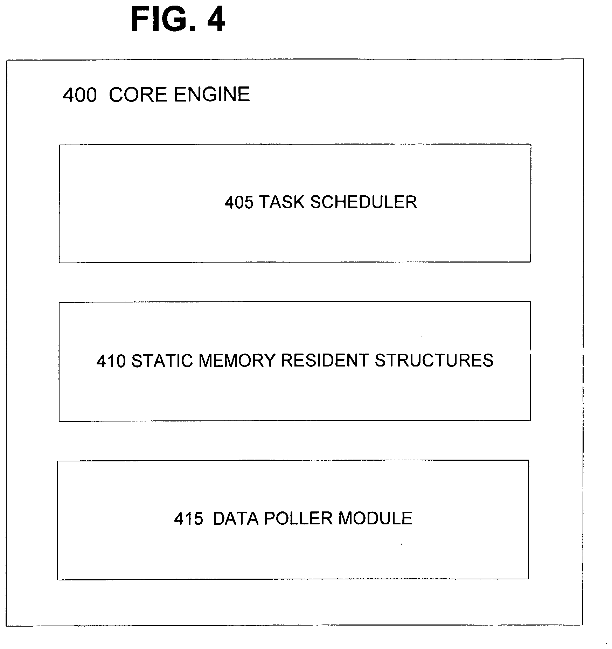

Referring to **Figure 4****,** the components of a core engine are illustrated according to an exemplary embodiment of the present invention. In this embodiment, the core engine reads and updates the DIDB, builds configuration files for network management tools, communicates with autocontrollers, analyzes data, imports data into the NDB, manages the failover/redundancy components for all autocontroller instances, and sends status events to event reporting modules.

The core engine **400** comprises individual software components that work together in a modular fashion to read device inventories, user access control systems and control network-monitoring systems. In an exemplary embodiment of the present invention, a task scheduler **405** is cron-run, as opposed to running as a formal daemon, in order to extend its flexibility for the many roles that it performs. In this exemplary embodiment of core engine **400,** the functionality can be turned on and off via command line switches, allowing the core engine to be run in several different modes simultaneously. Therefore, one instance of the core engine **400** can be run in auto-discovery mode, detecting devices on the network, while another auto-configures tools and controls communication of the polled data flow into the back-end database. Still another instance might be correlating data between the device inventory and the actual current network topology.

In another exemplary embodiment, the core engine uses static memory resident structures **410** to hold all device and service configuration information. Although the use of static memory consumes more memory during runtime, the memory structures are protected from other systemic processes, and therefore will not be corrupted if the system runs low on memory. Furthermore, the static memory allows the program a faster runtime when compared to a dynamic memory based system, which consumes several CPU cycles while allocating, reallocating, and cleaning memory. However, this is not meant as a limitation. As will be appreciated by those skilled in the art of the present invention, the tasks of the core engine may be implemented in software and hardware in numerous ways without departing from the scope of the present invention which is defined in the appended claims.

In another exemplary embodiment of the present invention, the core engine comprises a data poller module (DPM) **415** for polling devices in the field via SNMP or by executing command-line interface commands on the devices being monitored to obtain updated configuration information. In this embodiment, the core engine receives updated configuration data from DPM and compares the actual status of devices in the field against the last known configuration of the devices stored on the DIDB (not shown). This comparison is done by running the DPM against a specified device and comparing the results of the poll with all of the values of the memory resident structures.

In yet another exemplary embodiment, the DPM **415** uses the SNMP and Telnet data acquisition methods, as well as Open Shortest Path First (OSPF) autodiscovery, to perform aggressive SNMP community string testing for devices with which it cannot communicate. This analysis is performed to ensure the data integrity of the DIDB and the synchronization of the NMS applications. Discrepancies found between the actual router field configuration and the database values are flagged by the modification of the status column value to "changed". An exception report in the form of an email is then generated and forwarded to a designated change control address, informing both network operations center (NOC) and support system personnel of the device change. An SNMP trap, indicating the change, is also generated and sent to the NMS server. Therefore, NOC personnel are able to compare this event with any planned tickets and act accordingly. Additionally, when the elements of a specified device are found to have differences, the core engine discerns both which device interface has changed and the old and new SNMP index values for the interface. This analysis helps preserve archived network monitoring data that is listed using a set of primary keys (SNMP Interface Index, Interface IP address, and Type/Slot).

With respect to devices that have been flagged as "changed", the core engine **400** uses the configuration values stored in the DIDB structure to configure the NMS tools (applications) to reflect the changes. The SNMP traps and email exception reports contain all relevant information regarding the elements changed and the before and after values, in order to accomplish accurate change management for each modified device. If the SNMP index values have changed and the device is flagged for monitoring via the monitoring column of the structure, an automatic reconfiguration event for all NMS tools is initiated to reflect the given change. This mechanism ensures that changes found in the network are communicated to applications across the network and flagged as exceptions for further analysis.

### B. The Autocontroller

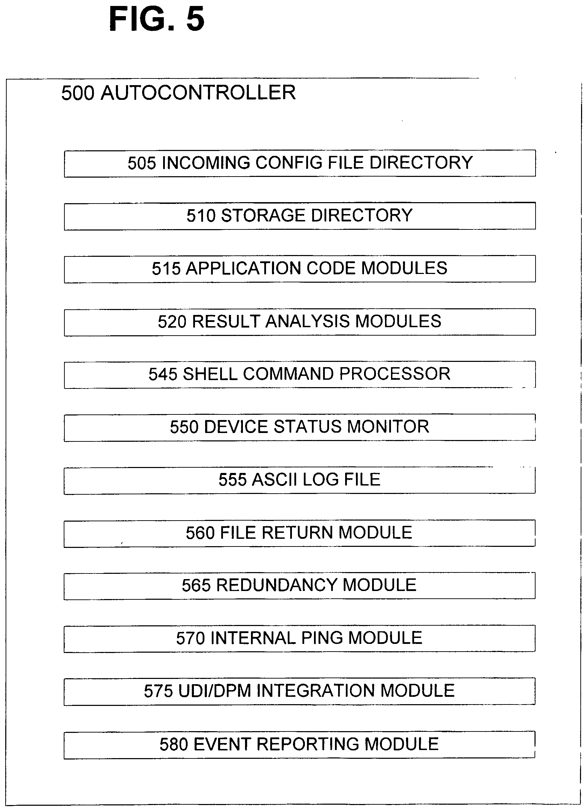

Referring to **Figure 5****,** the components of an autocontroller are illustrated according to an exemplary embodiment of the present invention. The autocontroller illustrated in **Figure 5** is illustrative of functions performed by an autocontroller according to the present invention, but the invention is not limited to the functions illustrated. As previously described, the autocontroller manages the applications running on an application server. The functions of a particular autocontroller are therefore specific to the applications that it manages.

According to the exemplary embodiment illustrated in **Figure 5****,** the autocontroller application is coded in a modular fashion thereby simplifying the addition of new tools (applications). The code comprises software modules that the autocontroller loads into memory, creating a simple process for modifying the autocontroller behavior towards each network management application and customizing the autocontroller to function with network management applications of various vendors. Each application under the core engine control uses the same autocontroller module, with each tool type and option selectable via command line switches. The autocontroller application is generic to any specific network management application. Each application governed by the autocontroller is unique and requires customized code for to permit the autocontroller to perform its assigned management tasks. By way of illustration, a module permits the autocontroller to stop, started, restart, manipulate, and direct an application. Because the command structure differs among applications, a unique module customized to an application is used. The process is run under cron control, with safeguards to block multiple instances, allowing better application control and a customizable run frequency.

One of the primary functions of the autocontroller is to update files for network management applications in the field with files created by the core engine. After being generated by the core engine, the freshly created configuration files, binary files, modules and the like are transferred to the appropriate application server. In an exemplary embodiment of the present invention, this transfer is accomplished via file transfer protocol (FTP) or secure protocol (SCP) and the transferred filed is stored in an incoming directory **505** to await processing. Each configuration file follows a strict naming convention that also allows for a custom (unique) component. Furthermore, the autocontroller is designed to accept program binary updates, data collection/analyzer files, and shell command files.

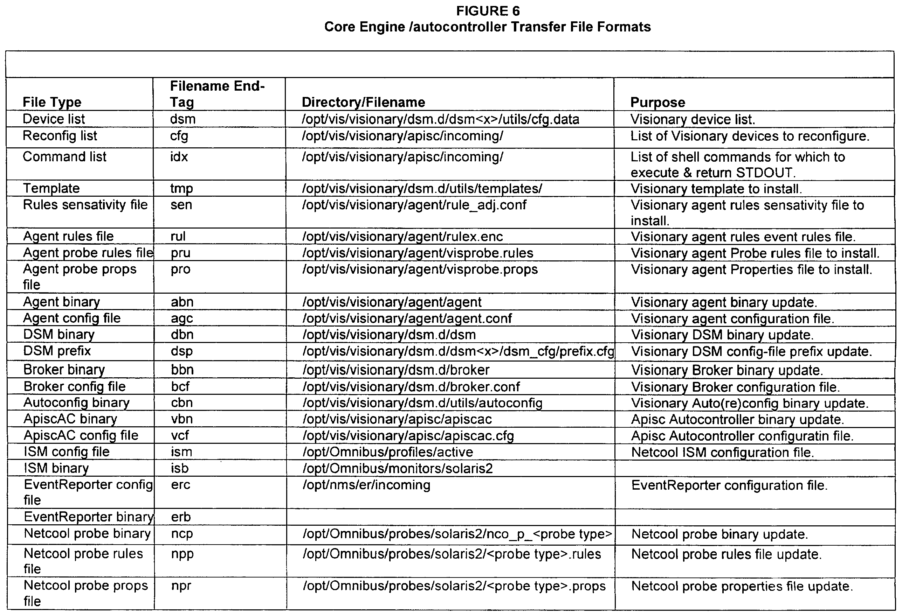

**Figure 6** illustrates the core engine/autocontroller transfer file formats as used in an exemplary embodiment according to the present invention. In this exemplary embodiment, the network applications are components of Netcool® Suit™ produced by MicroMuse Inc., but this is not meant as a limitation. Referring to **Figure 6****,** each transfer file name is broken down into four or five dot-notated words. For example:
acfile.<ID>.<unique piece>.<TAG>.[DSM]

The first word, acfile, identifies the file as one that the autocontroller should process. The <ID> represents the instance number in the meta-data configuration file. The <TAG> is one of the filename and tags listed in the table above. The optional [DSM] defines the DSM to which this file pertains, and is used by the event reporting module and applications running on the NMS poller servers. As will be apparent to those skilled in the art, other file formats capable of conveying file, TAG, and DSM identifying information may be employed without departing from the scope of the present invention, which is defined by the appended claims.

Each application governed by the autocontroller is unique and requires customized code for such management tasks as being stopped, started, restarted, manipulated, or directed. To that end, the autocontroller has an application code module **515** dedicated to each application that it supports. Each application is tied to a command line trigger so that individual applications can be activated or not activated, as desired, depending upon the autocontroller location and purpose. According to an exemplary embodiment, if the autocontroller is commanded to check for incoming files (default behavior in an embodiment), each file listed in the incoming directory (see **Figure 5**) has its filename parsed to determine whether it is a core engine transfer file. Once the filename is parsed and identified, specific action is taken depending upon the file being transferred to the autocontroller. The <ID> field ties each transfer file back to a specific application instance in the meta-data configuration file, determining the application type and location to which the file applies, as well as other details. The <TAG> field defines the type of transfer file being sent in, and thus determines the course of action to be taken regarding the contents of the file. In the case of application configuration and binary files, the files are renamed to the application standard, moved into position, and a restart of the application is scheduled. In the case of command line files (IDX), the file represents shell commands to be executed (one command per line). The [DSM] field, event reporting module, defines the role of the configuration file being propagated. In the present embodiment, DSM No. 1 is primary and DSM No. 2 is the backup file for use by a remote data center (RDC) in the event the primary data control center is unable to perform its tasks.

If the autocontroller successfully processes a given transfer file, the file is compressed and archived in a storage directory **510.** If the autocontroller fails to successfully process a transfer file, it issues an alarm notification and the file remains in the incoming directory so that processing may be reattempted the next time the autocontroller launches. This allows transfer files to accumulate in the incoming directory **505,** and to be processed at another time; to ensure that no change is lost should the autocontroller fail to operate for any reason.

The shell command processor **545** of the autocontroller of this exemplary embodiment fulfills several requirements. First, it is used to activate, deactivate, and restart applications, when necessary, from a centralized location. Using this feature the core engine can direct and coordinate the redundancy features of each autocontroller instance in the field. The shell command processor **545** also serves as a mechanism for data collection of non-SNMP data, such as traceroute, by listing processes running on a server and gathering statistical information about server performance that is not otherwise available through a network management tool. It can also be used in a utilitarian role to globally execute changes on all autocontroller servers (or some grouping there of). This capability grants the core engine and its autocontroller enormous flexibility and data collection capability.

The shell commands executed using this feature run from the same account as the autocontroller, which is never the root user. Each command is run individually and has its output directed to a log file that the autocontroller will later analyze and return to the core engine as a result file. This logging allows the core engine to confirm that each shell command executed properly, and provides an easy mechanism for gathering data from the field servers. The format of the shell command input file consists of each shell command to be executed on a single line of ASCII text.

According to an exemplary embodiment, a result analyzer module 520 of the autocontroller parses output files and the results from selected applications and perform actions based upon that analysis. In the exemplary embodiment, parsing comprises processing a text output file or configuration file following the execution of shell commands, reconfiguration commands, and log files by the autocontroller. The result analyzer module **520** runs after all incoming transfer files are processed and all commands and reconfigurations are complete. When the results of this analysis require that the data be returned to the core engine, output files with the appropriate naming convention are created and moved to the outgoing directory to be transferred.

In its simplest form for shell commands, the result analyzer module **520** will return the raw output of each command executed in an easy to parse format that the core engine can process. The shell commands processing files are sent to the autocontroller from the core engine, where they are executed one command at a time and the results placed in a specially formatted output file. In this manner, any desired shell commands can be run on the autocontroller server at will, providing the core engine and its autocontroller instances with great control and flexibility over their operating environment.

In a more complex context, a result analyzer module **520** is used with a DSM (distributed status monitor) **550** to analyze the results of device reconfigurations. Each time the autocontroller schedules and executes a device reconfiguration, the results of that reconfiguration are placed in an ASCII log file **555.** A successful reconfiguration will result in a configuration file that a DSM will use to SNMP poll that device. These device configuration files contain valuable information about the interfaces that reside on the device, as well as a listing of each object identifier (OID) polled for the device. The result analyzer module **520** parses both of these files to determine if the reconfiguration was successful, and if so, to mine the device configuration file for critical data. This data is placed in a specially formatted output file in the outgoing directory that is picked up by the transfer file process and returned to the core engine.

A file return module **560** is used to send result files and other data from an instance of the autocontroller to the core engine servers. In an embodiment of the present invention, the file return module **560** uses both FTP and SCP as the actual transfer mechanism, both of which are selectable using command line options. The file return module **560** utilizes a user-selected outgoing directory that it will scan for files to be transferred. This process does not depend on a particular file naming convention, but rather, will transfer any file located in the outgoing directory to the core engine.

This generic operation of the file return module **560** allows the autocontroller and other applications (if required) to perform a myriad of different tasks and simply place their return output in the outgoing directory, as each task is completed. For security purposes, the autocontroller will only return files to the core engine, and not to other user-defined locations. The file return module **560** is one of the last functions performed by the autocontroller during runtime operation.

In another exemplary embodiment, each autocontroller supports a redundancy module **565.** The purpose of the redundancy module is to detect failures and handle application failover. In this context, the autocontroller instances will start and stop a backup application instance, locally store critical SNMP data, and literally shut themselves down or reactivate themselves depending upon their status and the status of an assigned buddy autocontroller.

The autocontroller has an internal ping module **570** that allows it to perform pings against the core engine core and other autocontroller servers. The autocontroller also has an integration module **575** that allows it to make SNMP, I CMP, trace-route, and Web queries using a standardized XML-like messaging library. In another embodiment of the present invention, if connectivity to the core engine is lost, the autocontroller redundancy module **565** initiates a series of tasks to reestablish communication. All autocontroller instances involved will send alarm traps and e-mails, and log the event. The autocontroller will launch one or more instances of the event reporting module **580** in order to capture critical SNMP data in local files, which can then be transferred and uploaded to the NDB later. When the core engine core becomes reachable again, it commands the autocontroller to resume normal communication with the core. The backup event reporting module instances are shut down and their locally held data files are moved into the outgoing directory for transport. Once in the outgoing directory the return file module **560** will handle the actual transport back to the core engine core.

Similarly, in another exemplary embodiment of the present invention, if connectivity to a buddy autocontroller is lost the autocontroller redundancy module initiates tasks to reestablish communication with the buddy autocontroller. The following cause/effect scenarios are accounted for in this embodiment of the autocontroller redundancy module:
*Cause:* Connectivity to the APISC core server is lost.
*Effect:*
   - All autocontroller instances involved will send alarm traps and e-mails, and log the event.
   - The autocontroller will launch one or more backup instances of the error reporting module in order to capture critical SNMP data in local files, which can then be transferred and uploaded to the NDB later.
   - When the core engine becomes reachable again, it commands the autocontroller to resume normal communication with the core engine.
   - The backup error reporting instances are shut down and their locally held data files are moved into the outgoing directory for transport.
   - Once in the outgoing directory the return file module will handle the actual transport back to the core engine.
*Cause:* Connectivity to a buddy NMS poller server is lost.
*Effect:*
   - All autocontroller instances involved will send alarm traps and e-mails, and log the event.
   - The autocontroller will launch a backup instance of the DSM to support and poll the devices normally polled by the unreachable buddy. This involves launching DSM No. 2 with the failed buddy NMS poller's device list. The autocontroller will maintain DSM No. 2 for a period of time after the buddy NMS poller server comes back online.
   - The autocontroller used by the event reporting servers will launch a modified version of event reporting module **580** for the failed buddy NMS poller server that looks at DSM No. 2 for SNMP data.

### C. Core Engine Configuration

According to an exemplary embodiment of the present invention, the core engine utilizes two configuration files to perform all of its necessary operations: Meta-Configuration and object identifier (OID) configuration. These files contain specific instructions for the management of network management applications. In this exemplary embodiment, the core engine and the autocontroller use the same Meta-configuration file, which allows the core and field elements to remain completely synchronized. The configuration file is read in when the autocontroller boots. This file is broken down into three main sections using a single simplified attribute/value pair table that is designed for direct integration with the DIDB database. In this manner, the DIDB control the activities of each field autocontroller instance. The Meta-configuration file contains three fields, an integer ID field and attribute/value pair fields. The ID number determines the application instance to which each attributes/value pair belongs. The first section designates the core engine core, the second the autocontroller, and the remaining sections are for each application instance.

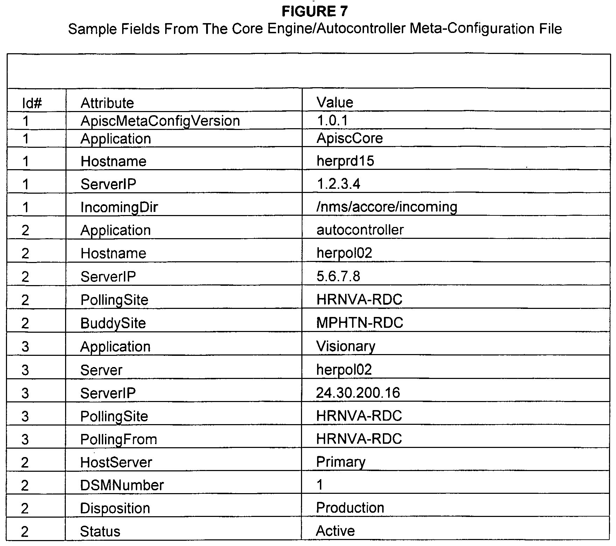

Referring to **Figure 7****,** the structure of a meta file is illustrated according to an exemplary embodiment of the present invention. In this exemplary embodiment, the network applications are components of Netcool® Suit™ produced by MicroMuse Inc. and the OpenView suit of NMS products produced by Hewlett-Packard Company, but this is not meant as a limitation. Each application instance has a unique ID number for it's each attribute/value pairs. The schema architecture of the Meta-configuration files used in this embodiment for the core engine and the autocontroller instances was chosen for several reasons. The use of a simple attribute/value pair format makes the integration with databases clean and easy to change and manipulate. The core engine and the autocontroller instances connect to the DIDB to poll the configuration file directly. This ensures that changes made to the DIDB regarding the core engine and the autocontroller take effect quickly. For redundancy purposes the autocontroller makes a local backup copy of the meta-data configuration file so that in the event the database becomes unreachable, the autocontroller is can continue to function using their last good read from DIDB.

Another attribute of this format is that it is standardized and can be easily understood. The purpose of each variable is incorporated into its name, using a logical naming convention. If more than one word comprises a variable, each word in the variable is capitalized (example: PollingSite). The meta-data design is completely extensible out to an infinite number of application instances without requiring structural changes. This feature of the configuration file is especially useful in network management systems with large network device inventories.

The meta-data format further accommodates the creation and propagation of the same network management tool's configuration file to several locations. For example, multiple instances of an application may unique instances defined in the configuration file. Because both the core engine and each autocontroller use the same configuration file, the core engine core and the inventory of autocontrollers are always synchronized with one another.

At application boot time, the autocontroller attempts to connect to the DIDB and read its meta-configuration file using scripts. If this succeeds, a fresh local backup of the meta-configuration is saved to disk. If it fails, the autocontroller issues an alarm and falls back to the last known good copy of the meta-configuration file stored on disk. Once the meta-configuration file is read, it is stored in memory structures that mimic the file structure.

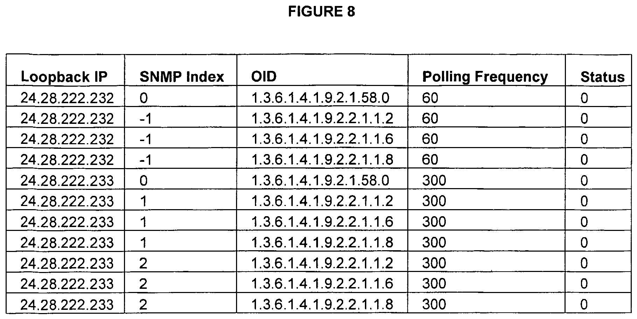

Referring to **Figure 8****,** the structure of an object identifier (OlD) configuration file is illustrated according to an exemplary embodiment of the present invention. The object identifier configuration file provides a mechanism for specifying how SNMP OIDs are gathered. Each device and device interface can have a custom list of OIDs that are polled and expected back via a report of that data. The autocontroller uses this configuration data to build the event reporting module configuration files, which specify the OID data required from each device in the field.

As illustrated in **Figure 8****,** the OID configuration file comprises:
- a Loopback IP the IP address of the device listed in the DIDB. This field acts as the primary key for each device;
- SNMP index -the integer SNMP index value for the device interface to which this OID applies. A value of '0' indicates that the OID is a chassis OID and thus does not apply to any interface. The value of '-1' indicates that the OID should apply to all interfaces on the device;
- OID -the dot-notated form of the OID being polled;
- Polling frequency -how often the OID is to be polled in seconds. A value of 300 thus indicates that the OID is to be polled once every five minutes; and
- Status - an integer binary (0/1) that determines whether the OID is active or inactive. In the exemplary embodiment, the status field is used to turn off regularly scheduled polling of four OIDs during outages, maintenance windows, failover scenarios, and the like.

The OID configuration file is similar in structure to a base configuration file, with the addition of two fields - 'Polling Interval' and 'Status'. The format thus allows each device and device interface known to the DIDB to have OIDs defined at custom intervals for retrieval, storage in the NDB, and reporting. Another similarity to the base meta-configuration file is that the OID configuration file is prepared from a table in the DIDB schema, and the same OID configuration file is used by all autocontroller instances.

### OTHER EMBODIMENTS

The present invention has been described in the context of a network manage system in which the data to be synchronized comprises configuration data. The invention is not so limited. In another embodiment, the "network" is a distributed financial system and the data to be synchronized financial variables that are used by various applications of the financial system. In this embodiment, the central database receives reports of changes in financial variables from information gathering applications across a financial network. The core engine monitors the central data structure, determines if a financial variable has changed within the network, then populates the changes to all network applications. In this way, the financial network is "synchronized" as to the variables that are deemed important to the functioning of the financial network. As those skilled in the art of the present invention will appreciate, the present invention can be applied to any system in which disparate components benefit from synchronization (such as billing systems and weather systems) without departing from the scope of the present invention as defined by the appended claims.

A system and method for the configuration of distributed network management applications and devices has now been illustrated. The management of these devices and applications (sometimes collectively referred to as "objects") is performed without human intervention. Although the particular embodiments shown and described above will prove to be useful in many applications relating to the arts to which the present invention pertains, further modifications of the present invention herein disclosed will occur to persons skilled in the art. The scope of the present invention is defined by the appended claims.

## Claims

1. A change management system comprising:
a plurality of network management objects which are selected from the group of configurable network devices (235, 240, 245) and applications connected to a network,
wherein each network management object is associated with network management object configuration information;
a plurality of network application servers (225), wherein one or more applications reside on each network application server and wherein each of the plurality of network application servers is adapted to communicate with at least one network management object via the network;
a data store (200), wherein the data store comprises last known configuration information associated with the network management objects;
a core engine (215) connected to the network, wherein the core engine is adapted to:
poll the plurality of network management objects for current configuration information of each of the plurality of network management objects;
receive the current configuration information from each of the plurality of network management objects; and
for each of the plurality of network management objects,
make a determination as to whether a current network management object configuration information is different from a last known network management object configuration information as stored in the data store;
if the current network management object configuration information is different from the last known network management object configuration information, then process the current network management object configuration information received from the network management object to obtain a new network management object configuration file; and
send the new network management object configuration file to a controller server (220) associated with at least one of the plurality of application servers on which at least one application resides,
wherein the system also comprises said controller server which is adapted to configure the one or more applications on each network application server with the new network management object configuration file.

2. The system of claim 1, wherein the network management object comprises a configurable device.

3. The system of claim 2, wherein the device is selected from the group consisting of a switch, a modem, and a server.

4. The system of claim 1, wherein the network management object comprises a configurable application.

5. The system of claim 4, wherein the configurable application is selected from the group consisting of a poller, a reporting engine, a network portal, and an access control server.

6. The system of claim 1, wherein the core engine is further adapted to update the data store with the current network management object configuration information of the network management object.

7. The system of claim 1, wherein the network management object has no last known configuration information.

8. The system of claim 1, wherein the controller server is adapted to:
identify an application from the one or more applications residing on each network application server for updating;
receive the new network management object configuration file;
convert the new network management object configuration file into a format accepted by the identified application;
update a configuration of the identified application with an appropriate converted configuration;
stop each application; and
restart each application.

9. The system of claim 1, wherein the controller server is also associated with a buddy application server, wherein the controller server is adapted to:
monitor connectivity between the one of the plurality of network application servers and the buddy network application server;
if the connectivity between the one of the plurality of network application servers and the buddy network application server is lost, then launch on the one of the plurality of the network application servers a backup instance of an application operated by the buddy network application server;
operate the back-up instance of the application on the one of the plurality of network application servers so as to perform the tasks of the buddy network application server;
monitor the connectivity between the one of the plurality of network application servers and the buddy network application server; and
if connectivity between the one of the plurality of network application servers and the buddy network application server is restored, then shut down the backup instance of the application on the one of the plurality of network application servers.

10. The system of claim 1, wherein the network is selected from the group consisting of a hybrid fiber network, a wired network, and a wireless network.

11. The system of claim 1, wherein the network is the Internet.

12. The system of claim 1, wherein the network is an intranet.

13. A method for managing change on a network comprising:
storing (345) in a central database the last known configuration information associated with a plurality of network management objects which are selected from the group of configurable network devices and applications connected to a network;
polling (312) by a core engine the plurality of network management objects for current configuration information of each of the plurality of network management objects;
receiving (314) by the core engine the current configuration information from each of the plurality of network management objects; and
making by the core engine a determination (316) for each of the network
management objects as to whether a current network management object configuration information is different from a last known network management object configuration information as stored in the central database;
if the current network management object configuration information is different (320) from the last known network management object configuration information, then processing (325, 330) by the core engine the current network management object configuration information received from the network management object to obtain a new network management object configuration file;
sending (335) by the core engine the new network management object configuration file to a controller server associated with at least one of the plurality of application servers on which at least one application resides,
wherein the controller server configures (340) the one or more applications on each
network application server with the new network management object configuration file.

14. The method of claim 13, wherein the network is selected from the group consisting of a hybrid fiber network, a wired network, and a wireless network.

15. The method of claim 13, wherein the network is the Internet.

16. The method of claim 13, wherein the network is an intranet.

## Patentansprüche

1. System zur Verwaltung von Änderungen, enthaltend:
mehrere aus der Gruppe der mit einem Netzwerk verbundenen konfigurierbaren Netzwerkgeräte (235, 240, 245) und Anwendungen ausgewählte Netzwerkverwaltungsobjekte,
wobei jedes Netzwerkverwaltungsobjekt mit Netzwerkverwaltungsobjekt-Konfigurationsinformationen verknüpft ist;
mehrere Netzwerk-Anwendungsserver (225),
wobei auf jedem Netzwerk-Anwendungsserver eine oder mehrere Anwendungen residieren und jeder der mehreren Netzwerk-Anwendungsserver dazu ausgebildet ist,
über das Netzwerk mit mindestens einem Netzwerkverwaltungsobjekt zu kommunizieren;
einen Datenspeicher (200), wobei der Datenspeicher mit den
Netzwerkverwaltungsobjekten verknüpfte letzte bekannte Konfigurationsinformationen enthält;
einen mit dem Netzwerk verbundenen Core Engine (215), wobei der Core Engine dazu ausgebildet ist:
die mehreren Netzwerkverwaltungsobjekte nach aktuellen Konfigurationsinformationen für jedes der mehreren Netzwerkverwaltungsobjekte abzufragen;
von jedem der mehreren Netzwerkverwaltungsobjekte die aktuellen Konfigurationsinformationen zu empfangen; und
für jedes der mehreren Netzwerkverwaltungsobjekte zu ermitteln, ob die aktuellen Netzwerkverwaltungsobjekt-Konfigurationsinformationen von den im Datenspeicher gespeicherten letzten bekannten Netzwerkverwaltungsobjekt-Konfigurationsinformationen abweichen;
falls die aktuellen Netzwerkverwaltungsobjekt-Konfigurationsinformationen von den letzten bekannten Netzwerkverwaltungsobjekt-Konfigurationsinformationen abweichen, die vom Netzwerkverwaltungsobjekt erhaltenen aktuellen Netzwerkverwaltungsobjekt-Konfigurationsinformationen zu verarbeiten, um eine neue Netzwerkverwaltungsobjekt-Konfigurationsdatei zu erhalten; und
die neue Netzwerkverwaltungsobjekt-Konfigurationsdatei an einen Controller-Server (220) zu senden, der mit mindestens einem der mehreren Anwendungsserver verbunden ist, auf dem mindestens eine Anwendung residiert,
wobei das System auch den genannten Controller-Server beinhaltet, der dazu ausgebildet ist, die eine oder die mehreren Anwendungen auf jedem Netzwerk-Anwendungsserver mit der neuen Netzwerkverwaltungsobjekt-Konfigurationsdatei zu konfigurieren.

2. Das System nach Anspruch 1, wobei das Netzwerkverwaltungsobjekt ein konfigurierbares Gerät umfasst.

3. Das System nach Anspruch 2, wobei das Gerät aus der Gruppe bestehend aus einem Switch, einem Modem und einem Server ausgewählt ist.

4. Das System nach Anspruch 1, wobei das Netzwerkverwaltungsobjekt eine konfigurierbare Anwendung umfasst.

5. Das System nach Anspruch 4, wobei die konfigurierbare Anwendung aus der Gruppe bestehend aus einem Poller, einer Reporting-Engine, einem Netzwerkportal und einem Zugangskontrollserver ausgewählt ist.

6. Das System nach Anspruch 1, wobei der Core Engine weiter dazu ausgebildet ist, den Datenspeicher mit den aktuellen Netzwerkverwaltungsobjekt-Konfigurationsinformationen des Netzwerkverwaltungsobjekts zu aktualisieren.

7. Das System nach Anspruch 1, wobei das Netzwerkverwaltungsobjekt keine letzten bekannten Konfigurationsinformationen aufweist.

8. Das System nach Anspruch 1, wobei der Controller-Server dazu ausgebildet ist:
eine Anwendung aus einer oder mehreren Anwendungen, die auf jedem Netzwerk-Anwendungsserver residieren, zur Aktualisierung zu ermitteln;
die neue Netzwerkverwaltungsobjekt-Konfigurationsdatei zu empfangen;
die neue Netzwerkverwaltungsobjekt-Konfigurationsdatei in ein von der ermittelten Anwendung akzeptiertes Format zu konvertieren;
eine Konfiguration der ermittelten Anwendung mit einer geeigneten konvertierten Konfiguration zu aktualisieren;
die jeweilige Anwendung zu beenden; und
die jeweilige Anwendung neu zu starten.

9. Das System nach Anspruch 1, wobei der Controller-Server zudem mit einem Buddy-Anwendungsserver verbunden ist, wobei der Controller-Server dazu ausgebildet ist:
die Konnektivität zwischen dem einen der mehreren Netzwerk-Anwendungsserver und dem Buddy-Netzwerk-Anwendungsserver zu überwachen;
falls die Konnektivität zwischen dem einen der mehreren Netzwerk-Anwendungsserver und dem Buddy-Netzwerk-Anwendungsserver unterbrochen ist, auf dem einen der mehreren Netzwerk-Anwendungsserver eine Backup-Instanz einer vom Buddy-Netzwerk-Anwendungsserver ausgeführten Anwendung zu starten;
die Backup-Instanz der Anwendung auf dem einen der mehreren Netzwerk-Anwendungsserver auszuführen, um die Aufgaben des Buddy-Netzwerk-Anwendungsservers auszuführen;
die Konnektivität zwischen dem einen der mehreren Netzwerk-Anwendungsserver und dem Buddy-Netzwerk-Anwendungsserver zu überwachen; und
falls die Konnektivität zwischen dem einen der mehreren Netzwerk-Anwendungsserver und dem Buddy-Netzwerk-Anwendungsserver wiederhergestellt ist, die Backup-Instanz der Anwendung auf dem einen der mehreren Netzwerk-Anwendungsserver zu schliessen.

10. Das System nach Anspruch 1, wobei das Netzwerk aus der Gruppe bestehend aus einem hybriden Glasfasemetz, einem kabelgebundenen Netzwerk und einem drahtlosen Netzwerk ausgewählt ist.

11. Das System nach Anspruch 1, wobei das Netzwerk das Internet ist.

12. Das System nach Anspruch 1, wobei das Netzwerk ein Intranet ist.

13. Verfahren zur Verwaltung von Änderungen in einem Netzwerk, enthaltend:
das Speichern (345) der letzten bekannten Konfigurationsinformationen mehrerer aus der Gruppe der mit einem Netzwerk verbundenen konfigurierbaren Netzwerkgeräte und Anwendungen ausgewählter Netzwerkverwaltungsobjekte in einer zentralen Datenbank; das Abfragen (312) der mehreren Netzwerkverwaltungsobjekte nach aktuellen Konfigurationsinformationen für jedes der mehreren Netzwerkverwaltungsobjekte durch einen Core Engine;
das Empfangen (314) der aktuellen Konfigurationsinformationen von jedem der mehreren Netzwerkverwaltungsobjekte durch den Core Engine; und
das Ermitteln (316) für jedes der mehreren Netzwerkverwaltungsobjekte mittels des Core Engines, ob aktuelle Netzwerkverwaltungsobjekt-Konfigurationsinformationen von in der zentralen Datenbank gespeicherten letzten bekannten Netzwerkverwaltungsobjekt-Konfigurationsinformationen abweichen;
falls die aktuellen Netzwerkverwaltungsobjekt-Konfigurationsinformationen von den letzten bekannten Netzwerkverwaltungsobjekt-Konfigurationsinformationen abweichen (320), das Verarbeiten (325, 330) der vom Netzwerkverwaltungsobjekt erhaltenen Netzwerkverwaltungsobjekt-Konfigurationsinformationen mittels des Core Engines, um eine neue Netzwerkverwaltungsobjekt-Konfigurationsdatei zu erhalten; und
das Senden (335) der neuen Netzwerkverwaltungsobjekt-Konfigurationsdatei mittels des Core Engines an einen Controller-Server, der mit mindestens einem der mehreren Anwendungsserver verbunden ist, auf dem mindestens eine Anwendung residiert,
wobei der Controller-Server die eine oder die mehreren Anwendungen auf jedem Netzwerk-Anwendungsserver mit der neuen Netzwerkverwaltungsobjekt-Konfigurationsdatei konfiguriert (340).

14. Das Verfahren nach Anspruch 13, wobei das Netzwerk aus der Gruppe bestehend aus einem hybriden Glasfasernetz, einem kabelgebundenen Netzwerk und einem drahtlosen Netzwerk ausgewählt ist.

15. Das Verfahren nach Anspruch 13, wobei das Netzwerk das Internet ist.

16. Das Verfahren nach Anspruch 13, wobei das Netzwerk ein Intranet ist.

## Revendications

1. Système de gestion de changements comprenant:
une pluralité d'objets de gestion du réseau choisis parmi le groupe des dispositifs réseau configurables (235, 240, 245) et des applications reliés à un réseau,
où chaque objet de gestion du réseau est associé à des informations de configuration de l'objet de gestion du réseau;
une pluralité de serveurs d'applications réseau (225),
où une ou plusieurs applications résident sur chaque serveur d'applications réseau, et où chacun parmi la pluralité de serveurs d'applications réseau est adapté à communiquer avec au moins un objet de gestion du réseau par l'intermédiaire du réseau;
une mémoire de données (200), où la mémoire de données comprend des informations de la dernière configuration connue associées aux objets de gestion du réseau;
un moteur central (215) relié au réseau, où le moteur central est adapté à:
interroger ladite pluralité d'objets de gestion du réseau sur les informations de configuration actuelle de chacun parmi ladite pluralité d'objets de gestion du réseau;
recevoir les informations de configuration actuelle de chacun de ladite pluralité d'objets de gestion du réseau; et
déterminer, pour chacun parmi ladite pluralité d'objets de gestion du réseau, si les informations de configuration actuelle de l'objet de gestion du réseau sont différentes des informations de la dernière configuration connue de l'objet de gestion du réseau telles qu'enregistrées dans la mémoire de données;
lorsque les informations de configuration actuelle de l'objet de gestion du réseau sont différentes des informations de la dernière configuration connue de l'objet de gestion du réseau, traiter les informations de configuration actuelle de l'objet de gestion du réseau reçues de l'objet de gestion du réseau afin d'obtenir un fichier de configuration nouvelle de l'objet de gestion du réseau; et
transmettre le fichier de configuration nouvelle de l'objet de gestion du réseau à un serveur contrôleur (220) associé à au moins un parmi ladite pluralité de serveurs d'applications sur lequel réside au moins une application,
où le système comprend également ledit serveur contrôleur qui est adapté à configurer ladite une ou lesdites plusieurs applications sur chaque serveur d'applications réseau à l'aide du fichier de configuration nouvelle de l'objet de gestion du réseau.

2. Le système selon la revendication 1, où l'objet de gestion du réseau comprend un dispositif configurable.

3. Le système selon la revendication 2, où le dispositif est choisi parmi le groupe constitué d'un commutateur, d'un modem et d'un serveur.

4. Le système selon la revendication 1, où l'objet de gestion du réseau comprend une application configurable.

5. Le système selon la revendication 4, où ladite application configurable est choisie parmi le groupe constitué d'un poller, d'un moteur de reporting, d'un portail de réseau et d'un serveur de contrôle d'accès.

6. Le système selon la revendication 1, où le moteur central est en plus adapté à mettre à jour la mémoire de données avec les informations de l'objet de gestion du réseau de configuration actuelle de l'objet de gestion du réseau.

7. Le système selon la revendication 1, où l'objet de gestion du réseau n'a pas des informations de la dernière configuration connue.

8. Le système selon la revendication 1, où le serveur contrôleur est adapté à:
identifier une application parmi une ou plusieurs applications résident sur chaque serveur d'applications réseau pour la mise à jour;
recevoir le fichier de configuration nouvelle de l'objet de gestion du réseau;
convertir le fichier de configuration nouvelle de l'objet de gestion du réseau en un format accepté par l'application identifiée;
mettre à jour une configuration de l'application identifiée avec une configuration convertie appropriée;
arrêter chaque application; et
relancer chaque application.

9. Le système selon la revendication 1, où le serveur contrôleur est également associé à un serveur d'applications auxiliaire, où le serveur contrôleur est adapté à:
surveiller la connectivité entre l'un parmi la pluralité de serveurs d'applications réseau et
le serveur d'applications réseau auxiliaire;
si la connectivité entre l'un parmi la pluralité de serveurs d'applications réseau et le serveur d'applications réseau auxiliaire est interrompue, lancer sur l'un parmi la pluralité de serveurs d'applications réseau une instance de secours d'une application opérée par le serveur d'applications réseau auxiliaire;
opérer l'instance de secours de l'application sur l'un parmi la pluralité de serveurs d'applications réseau afin d'effectuer les tâches du serveur d'applications réseau auxiliaire;
surveiller la connectivité entre l'un parmi la pluralité de serveurs d'applications réseau et
le serveur d'applications réseau auxiliaire; et
si la connectivité entre l'un parmi la pluralité de serveurs d'applications réseau et le serveur d'applications réseau auxiliaire est rétablie, arrêter l'instance de secours de l'application sur l'un parmi la pluralité de serveurs d'applications réseau.

10. Le système selon la revendication 1, où le réseau est choisi parmi le groupe constitué d'un réseau hybride fibre, d'un réseau câblé et d'un réseau sans fil.

11. Le système selon la revendication 1, où le réseau est l'Internet.

12. Le système selon la revendication 1, où le réseau est un intranet.

13. Procédé de gestion de changements dans un réseau, comprenant les étapes consistant à:
stocker (345), dans une base de données centrale, les informations de la dernière configuration connue associées à une pluralité d'objets de gestion du réseau choisis parmi le groupe des dispositifs réseau configurables et des applications reliés à un réseau;
interroger (312), par un moteur central, ladite pluralité d'objets de gestion du réseau sur les informations de configuration actuelle de chacun parmi ladite pluralité d'objets de gestion du réseau;
recevoir (314), par le moteur central, les informations de configuration actuelle de chacun de ladite pluralité d'objets de gestion du réseau; et
déterminer (316) par le moteur central pour chacun parmi ladite pluralité d'objets de gestion du réseau si les informations de configuration actuelle de l'objet de gestion du réseau sont différentes des informations de la dernière configuration connue de l'objet de gestion du réseau telles qu'enregistrées dans la base de données centrale;
lorsque les informations de configuration actuelle de l'objet de gestion du réseau sont différentes (320) des informations de la dernière configuration connue de l'objet de gestion du réseau, traiter (325, 330) les informations de configuration actuelle de l'objet de gestion du réseau reçues de l'objet de gestion du réseau afin d'obtenir un fichier de configuration nouvelle de l'objet de gestion du réseau;
transmettre (335), par le moteur central, le fichier de configuration nouvelle de l'objet de gestion du réseau à un serveur contrôleur associé à au moins un parmi ladite pluralité de serveurs d'applications sur lequel réside au moins une application,
où le serveur contrôleur configure (340) ladite une ou lesdites plusieurs applications sur chaque serveur d'applications réseau à l'aide du fichier de configuration nouvelle de l'objet de gestion du réseau.

14. Le procédé selon la revendication 13, où le réseau est choisi parmi le groupe constitué d'un réseau hybride fibre, d'un réseau câblé et d'un réseau sans fil.

15. Le procédé selon la revendication 13, où le réseau est l'Internet.

16. Le procédé selon la revendication 13, où le réseau est un intranet.
